# EUROPEAN PATENT APPLICATION

(11) **EP 3 696 919 A1**
(43) Date of publication of application: **19.08.2020**
(21) Application number: 20157411.8
(22) Date of filing: 14.02.2020
(51) Int. Cl.: H01R 12/59, H01B 7/02, H01B 7/08, H01B 13/00, H01R 12/65, H05K 3/36, H01R 12/62, H01R 43/02, H01M 2/00

(54) **CABLE AND METHOD FOR MANUFACTURING THE CABLE**

(30) Priority: 15.02.2019 DE 102019202061
(71) Applicant: TE Connectivity Germany GmbH, 64625 Bensheim (DE)
(72) Inventor: DRESSEL, Andre Martin, 68623 Lampertheim (DE); BRABETZ, Florian, 64579 Gernsheim (DE); KAEHNY, Frank, 64686 Lautertal (DE); TOTH, Gerzson, 68307 Mannheim (DE); EIBERGER, Richard, 73485 Unterschneidheim (DE)
(74) Representative: Grünecker Patent- und Rechtsanwälte PartG mbB

(57) **Abstract**

The invention relates to a cable (1) with at least one electrically conductive cable core (4) and one insulation (6) that at least partially encases the at least one cable core (4), wherein the cable (1) has at least one contact zone (10) for contacting an electrical conductor (8) and wherein the at least one cable core (4) is exposed in the at least one contact zone (10). In order for the cable (1) to be able to be miniaturised further, the contact zone (10) is filled according to the invention so that a surface (12) of the contact zone (10) is arranged substantially flush with a cable surface (14). Therefore, the cable (1) can be held down with low space requirements and can be connected to the electrical conductor (8), e.g. by laser welding. The invention further relates to a method for manufacturing a cable (1) and a cable connection (34) between an electrical conductor (8) and an inventive cable (1) by laser welding.

## Description

The invention relates to a cable with at least one electrically conductive cable core and one insulation that at least partially encases the at least one cable core, wherein the cable has at least one contact zone for contacting an electrical conductor and wherein the at least one cable core is exposed in the at least one contact zone. Furthermore, the invention relates to a method of manufacturing such a cable and to a cable connection between the cable and an electrical conductor.

Such cables are connected, in particular through ultrasound welding, to cell connectors of battery cells in a motor vehicle, for example, for the purpose of measuring difference in potential. In the case of ultrasound welding, a sonotrode is placed onto the contact zone. By introducing high-frequency mechanical vibrations, the sonotrode is caused to produce resonation which can be transferred to the contact zone. By virtue of the high frequency and the pressure, friction gives rise to an atomic connection between the contact zone and the electrical conductor. For this purpose, a minimum size of contact zone is required, so that the sonotrode can be placed on. Miniaturisation of the cable is thus prevented by the size of the contact zone.

Consequently, the object of the invention is to create a cable or a cable connection with as small a contact zone as possible. Moreover, the object of the invention is to provide a method of producing such a cable.

The object is achieved according to the invention for the above-mentioned cable in that the contact zone is filled such that a surface of the contact zone is arranged substantially flush with a cable surface.

Furthermore, the object is achieved through a cable connection according to the invention, in that the cable according to the invention and an electrical conductor are connected to one another at the contact zone by a laser welding connection.

According to the invention, the cable is manufactured by filling the contact zone until a surface of the contact zone is arranged substantially flush with a cable surface.

By virtue of the solution according to the invention, it is possible to hold the cable down on the contact zone without great effort. Therefore, the contact zone can be pushed against the electrical conductor and be connected to the electrical conductor, in particular by laser welding.

Therefore, it is no longer necessary to dimension the contact zone such that a sonotrode can be placed on. Due to the contact zone miniaturisation which is achieved as a result, the size of the cable can be reduced further. A further advantage through the filling of the contact zone until the surface of the contact zone is arranged substantially flush with the cable surface is that the cable core no longer has to be deformed, in particular no longer has to be pushed against the electrical conductor in order to contact the electrical conductor. As a result, the cable core can be prevented from tearing during connection and it is also possible to use cable cores which are relatively less thick.

Hereafter, further developments are cited which can be combined with one another independently of one another as desired and which are each advantageous viewed independently.

Therefore, according to a first advantageous configuration, for example, an electrically conducting contact material can be applied in the contact zone. Thus, not only a mechanical connection, but also an electrically conducting connection, can be produced between the electrical conductor and the cable.

The at least one cable core can preferably likewise be formed from the electrically conducting contact material. As a result, a homogeneous electrical system is created and contact corrosion between the contact material which fills the contact zone, and the cable core is avoided. Furthermore, this can lead to a simple cable connection design.

According to a further advantageous configuration, the at least one contact zone can be galvanically coated until the surface of the at least one contact zone is arranged substantially flush with the cable surface. The contact zone can be galvanically coppered, for example, in particular by means of reverse pulse plating or by means of via plating. As a result, the contact zone can be filled simply and precisely.

In order to keep the size of the at least one contact zone to a minimum, according to a further advantageous configuration, the at least one contact zone can have a width of a maximum of approximately 0.8 mm. As a result, the user acquires greater freedom in designing the cable connection, since with such a small contact zone a greater degree of tolerance is obtained in the positioning thereof relative to the electrical conductor.

According to a further advantageous configuration, the cable can have at least two cable cores arranged alongside one another, and in particular electrically insulated from one another, wherein each cable core can be exposed in at least one contact zone. Preferably, the contact zones at which the adjacent cable cores are exposed are spaced apart and/or separated from one another. As a result, several connections can be manufactured between the cable and the electrical conductor. For example, an electrical conductor can be contacted at various points by different cable cores or it is also possible for several electrical conductors to be contacted by the cable, with one cable core respectively being connected to one electrical conductor.

In particular, the contact zones of the at least two cable cores can be arranged offset from one another. The contact zones of the at least two cable cores can preferably be arranged offset from one another in a cable direction, along which the at least two cable cores extend. Soldering bridges can thus be avoided, in particular during soldering. If the contact zones are arranged offset from one another, the cable cores situated alongside one another can be brought closer to one another, without running the risk of unintentional bridge connection arising between the cable cores. Therefore, through offset contact zones, the dimensions of the cable, in particular its width, can be reduced.

In a particularly advantageous configuration, each cable core is exposed at at least two contact zones. There are thus at least two attachment possibilities for each cable core. The at least two contact zones are preferably spaced apart from one another in the cable direction. For example, the cable core can thus be connected to an electrical conductor, such as a cell connector of a battery module, at the first contact zone and to a circuit board at the second contact zone.

The cable can preferably be configured as a flat cable, in particular as a flexible flat cable, in which several cable cores are arranged parallel to one another on a level plane. Each cable core can be connected to a separate electrical conductor, or to the electrical conductor at points which are spaced apart from one another in the cable direction. Thus, for example, at least one cable core can be provided for each battery cell in a battery module which is constructed from several battery cells which are arranged in rows and connected by means of a cell connector. The flat cable can furthermore be soldered onto a circuit board, as a result of which, for example, the potential difference between the individual battery cells can be simply measured. The contact zone can be reduced in size as a result of the contact zone which is filled substantially flush with the cable surface in accordance with the invention. As a result, the flat cable can be equipped with a larger number of cable cores, for example, as a result of which the number of battery cells contacted by the flat cable increases, without increasing the width of the flat cable compared to conventional flat cables. The width of a cable core can thus be smaller than approximately 1 mm.

According to a further advantageous configuration, the at least one contact zone can be filled up on both sides substantially flush with the cable surface. The contact zone can therefore be filled up particularly above and below the cable core. The cable core is thus strengthened at the contact zone and the cable can be pushed against the electrical conductor from above without any problems. As a result, the cable core can have a comparatively smaller thickness, for example 0.075 mm, as the cable core does not have to be deformed for connection to the electrical conductor and is fixed in its position and protected by the contact zone which is filled up on both sides. Furthermore, the cable core and/or the flat cable can have a uniform thickness over the cable direction, as a result of which it is possible to guarantee safety from twisting, in particular when rolling up the cable core and/or the flat cable.

The at least one contact zone can preferably be circular, in particular in a cross-section along the cable direction. The filled-up contact zone thus substantially describes a cylinder. In particular, a central axis can be arranged substantially perpendicular to the cylinder axis and intersect it. As a result, it can be guaranteed that the cable core is exposed symmetrically in the contact zone and a uniform connection to the electrical conductor can be produced.

At least one contact zone can be supplied with a solder ball and/or a solder ball can be placed onto at least one contact zone. This can simplify the soldering of the cable onto a circuit board, for example. Alternatively, the cable can be connected to the contact zone by means of a laser-welded connection to the circuit board.

The contact zone can be galvanically filled, for example by way of electroplating. As a result, a precise and cost-efficient filling of the contact zone is possible. The contact zone can preferably be filled up by means of reverse pulse plating or via plating.

The cable connection can have at least one further electrical conductor, for example a circuit board which is connected to the cable at at least one contact zone. In this case, the circuit board can be soldered onto the contact zone or can have a welded connection through laser welding, for example.

The cable can extend along the cable direction over the electrical conductor and can be connected to the electrical conductor at contact zones which are offset from one another along the cable direction. As a result, it is possible to prevent the contact zones of the cable cores from being arranged in a straight line perpendicular to the cable direction, and to prevent unintentional bridging from occurring during connection.

Hereinafter, the invention is described in greater detail by way of example using exemplary embodiments with reference to the attached figures. In the figures, elements which correspond to one another in design and/or function are provided with the same reference symbols.

The combination of features shown and described with the individual exemplary embodiments serves solely the purposes of explanation. In accordance with the statements above, it is possible to dispense with a feature from an exemplary embodiment if this technical effect is of no importance in a particular application. Conversely, according to the above statements a further feature can be added in an exemplary embodiment if this technical feature is meant to be advantageous or necessary to a particular application.

In the drawings:
Fig. 1 shows a schematic sectional view of a cable according to the invention; and
Fig. 2 shows a schematic plan view of a cable connection according to the invention.

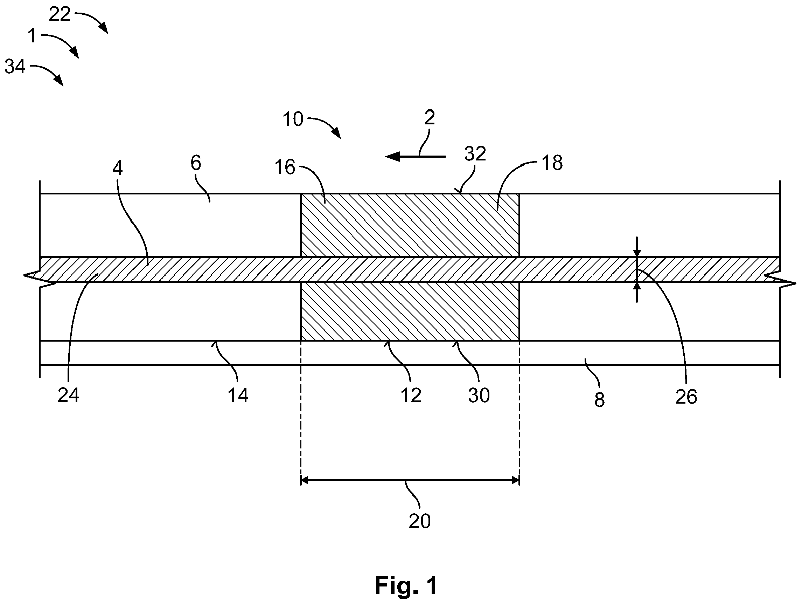

Fig. 1 shows a cable 1 according to the invention in a sectional view along a cable direction 2.

The cable 1 extends along the cable direction 2 and has at least one cable core 4, which is encased at least partially by an insulation 6. In order to contact an electrical conductor 8, which is schematically depicted in Fig. 1, the cable core 4 is exposed in a contact zone 10.

According to the invention, the contact zone 10 is filled so that a surface 12 of the contact zone 10 is arranged substantially flush with the surface 14 of the cable 1, in particular the insulation 6. As a result, the surface 12 of the contact zone 10 can be pushed against the electrical conductor 8 without great difficulty and without deforming the cable core 4. It is consequently possible, at the contact zone 10, to keep the distance between the contact zone 10 and the electrical conductor 8 small and to connect the cable 1 to the electrical conductor 8 preferably by means of laser welding methods.

In the contact zone 10, an electrically conductive contact material 16 can be applied galvanically onto the cable core 4, so that not only a mechanical connection between the cable 1 and the electrical conductor 8, but also an electrically conductive connection, is produced in the contact zone 10. The electrically conductive contact material 16 can be applied preferably galvanically, for example by means of a reverse pulse plating. It is particularly advantageous if the cable core 4 is formed from substantially the same contact material 16, so that no electrical multiphase system arises between a filling 18 of the contact zone 10 and the cable core 4. "Substantially" here means that the cable core 4 and the electrically conductive contact material 16 possess the same main component, and thus the cable core 4 for example can be formed from a copper alloy and the electrically conductive contact material 16 can be a different copper alloy.

By way of the contact zone 10 which is filled substantially flush with the surface 14, the contact zone can be held down without great difficulty, for example for laser welding. As a result, it is possible to keep a width 20 of the contact zone 10 small compared to a contact zone at which the cable 1 is connected to the electrical conductor 8 by means of laser welding. In the case of the known ultrasound welding, the cable core 4 is pushed against the electrical conductor 8 with a sonotrode, and therefore the width of the contact zone 10 must be sufficiently large to allow the sonotrode to be placed on the cable core. The contact zone 10 can for example have a width 20 of a maximum of approximately 0.8 mm.

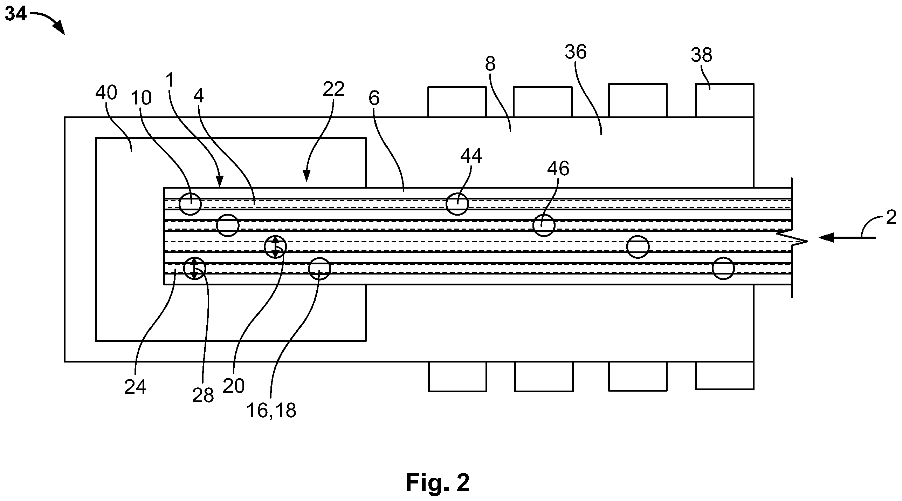

According to a particularly advantageous configuration, the cable 1 is a flat cable 22, in which several cable cores 4 are arranged parallel alongside one another on a level plane (see Fig. 2). The flat cable 22 is preferably a flexible flat cable (FFC), in which the cable cores 4 are configured as metal strips 24 with a thickness 26 and a width 28. The flat cable 22 can extend over the electrical conductor 8 and each cable core 4 can be connected to the electrical conductor 8. For this purpose, each cable core 4 is exposed at at least one dedicated contact zone 10. In this case, it is particularly advantageous if the contact zones 10 are arranged offset from one another in cable direction 2. As a result of this, the flat cable 22 can be connected to the electrical conductor 8, or also to different electrical conductors, at different positions along the cable direction 2.

As can be seen in Fig. 1, it is particularly advantageous if the contact zone 10 above and below the cable core 4 is filled perpendicular to the cable direction 2, until its surface 12 is arranged substantially flush with the cable surface 14 on an underside 30 and an upper side 32 which is situated opposite the underside 30. The cable core 4 can thus be protectively encased by the filling 18. A force can be exerted on the cable 1 at the upper side 32, in order to hold the contact zone 10 down during the joining process, without additionally stressing or deforming the cable core 4. Since a deformation of the cable core 4 is avoided, the thickness 26 of the cable core 4 can be minimised to approximately 0.075 mm. A cable core 4 with such a thickness 26 could tear in the event of a deformation, for example, as a result of pressing down with a sonotrode.

By way of the contact zone 10 which is filled on both sides substantially flush with the cable surface 14, the user is given greater freedom when designing his cable connection. The cable 1 can thus be arranged at a contact zone below an electrical conductor 8, or above.

Figure 2 schematically depicts a cable connection 34 according to the invention in a plan view.

The cable 1 is a flexible flat cable 22 which is laid onto the electrical conductor 8 and which extends over this in the cable direction 2. The electrical conductor 8 is, for example, a cell connector 36 which connects together individual battery cells 38 which are arranged in rows.

In this advantageous configuration, each cable core 4 has at least two contact zones 10 spaced apart from one another in the cable direction. The cable core 4 can be connected to the electrical conductor 8 in one contact zone 10 and to a further conductor, for example a circuit board 40, in the other contact zone 10. The cable cores 4 which lie alongside one another are preferably supplied with contact zones 10 which are offset from one another, so that in each case a cable core 4, at the height of a battery cell 38, can be connected to the electrical conductor 8.

In this case, it has proven to be particularly advantageous if the contact zones 10 are arranged offset from one another in cable direction 2 for connection to the circuit board 40. As a result, it is possible to prevent unintentional bridging between the cable cores 4 when soldering or welding.

The contact zones 10 can be configured such that they are suitable to receive a solder ball (not shown). For example, the circuit board 40 can be supplied with solder balls which can be placed onto the contact zone 10 in order to produce a simple and efficient solder connection between the circuit board 40 and the contact zone 10. For this purpose, a width 20 of the contact zone 10 can be greater than the width of the solder ball. Furthermore, it is advantageous if the filling 18 is stable and does not become deformed through the pressing-on of the solder ball.

In a plan view, the contact zone 10 preferably has a round cross-section 44. The filled contact zone 10 thus substantially describes a cylinder 46. In particular, a central axis of the cable core 4 can be arranged substantially perpendicular to the cylinder axis and can intersect it. As a result, it can be guaranteed that the cable core 4 is exposed symmetrically in the contact zone 10 and a uniform connection to the electrical conductor 8 can be produced. The width 20 of the contact zone 10, as is depicted in Fig. 2, can be greater than the width 28 of the cable core 4. As a result of this, the cable core 4 can be protectively surrounded by the filling 18 in the contact zone 10. Alternatively, the width 20 of the contact zone 10 can also be smaller than the width 28 of the cable core 4. As a result, the contact zone 10 is further minimised, which makes it possible to further miniaturise the cable 1 and the cable connection 34.

By virtue of the cable 1 according to the invention, with at least one contact zone 10 filled up to the cable surface 14, the space required to hold down the cable 1 can be significantly reduced. The contact zone 10 can be pushed against the electrical conductor 8 and can be connected to the electrical conductor 8 preferably by means of laser welding. As a result, a significantly smaller welding point is obtained compared to ultrasound welding, in which case a sonotrode has to be placed onto the welding point.

### REFERENCE NUMERALS

- 1: cable
- 2: cable direction
- 4: cable core
- 6: insulation
- 8: electrical conductor
- 10: contact zone
- 12: surface of the contact zone
- 14: surface of the cable
- 16: contact material
- 18: filling
- 20: width of the contact zone
- 22: flat cable
- 24: metal strips
- 26: thickness
- 28: width of the cable core
- 30: underside
- 32: upper side
- 34: cable connection
- 36: cell connector
- 38: battery cells
- 40: circuit board
- 44: cross-section
- 46: cylinder

## Claims

1. A cable (1) with at least one electrically conductive cable core (4) and one insulation (6) that at least partially encases the at least one cable core (4), wherein the cable (1) has at least one contact zone (10) for contacting an electrical conductor (8) and wherein the at least one cable core (4) is exposed in the at least one contact zone (10), **characterised in that** a surface (12) of the contact zone (10) is filled up substantially flush with a cable surface (14).

2. The cable (1) according to Claim 1, **characterised in that** an electrically conducting contact material (16) is applied onto the cable core (4) in the contact zone (10).

3. The cable (1) according to Claim 2, **characterised in that** the at least one cable core (4) is formed from the electrically conducting contact material (16).

4. The cable (1) according to any one of Claims 1 to 3, **characterised in that** the at least one contact zone (10) is galvanically filled up to the surface (12) of the contact zone (10) substantially flush with the cable surface (14).

5. The cable (1) according to any one of Claims 1 to 4, **characterised in that** the contact zone (10) has a width (20) of a maximum of 0.8 mm.

6. The cable (1) according to any one of Claims 1 to 5, **characterised in that** the cable (1) has at least two cable cores (4) arranged alongside one another and **in that** each cable core (4) is supplied with at least one contact zone (10).

7. The cable (1) according to Claim 6, **characterised in that** the contact zones (10) of the at least two cable cores (4) are separated from one another.

8. The cable (1) according to Claim 6 or 7, **characterised in that** the contact zones (10) of the at least two cable cores (4) are arranged offset from one another.

9. The cable (1) according to any one of Claims 1 to 8, **characterised in that** the at least one cable core (4) is exposed in at least two contact zones (10).

10. The cable (1) according to any one of Claims 1 to 9, **characterised in that** the cable (1) is a flat cable (22).

11. The cable (1) according to Claim 10, **characterised in that** the surface (12) of the at least one contact zone (10) is filled up on both sides substantially flush with the cable surface (14).

12. The cable (1) according to any one of Claims 9 to 11, **characterised in that** the at least one contact zone (10) has a substantially circular cross section (44).

13. A method for manufacturing a cable (1) with at least one electrically conductive cable core (1) and one insulation (6) that at least partially encases the at least one cable core (4), wherein the cable (1) has at least one contact zone (10) for contacting an electrical conductor (8) and wherein the at least one cable core (4) is exposed in the at least one contact zone (10), **characterised in that** the at least one contact zone (10) is filled up to a surface (12) of the contact zone (10) substantially flush with the cable surface (14).

14. The method according to Claim 13, **characterised in that** the at least one contact zone (10) is filled galvanically.

15. A cable connection (34) comprising an electrical conductor (8) and a cable (1) according to any one of Claims 1 to 12, **characterised in that** the cable (1) has a laser weld connection at at least one contact zone (10) with the electrical conductor (8).
